# EUROPÄISCHE PATENTSCHRIFT

(11) **EP 0 964 589 B1**
(45) Veröffentlichungstag und Bekanntmachung des Hinweises auf die Patenterteilung: **05.12.2007**
(21) Anmeldenummer: 99440131.3
(22) Anmeldetag: 03.06.1999
(51) Int. Cl.: H04Q 3/00, H04L 12/24

(54) **Verwalten eines Netzelelementes mittels verwalteter Objekte in einem digitalen Nachrichtenübertragungsnetz**
Management of a network element through managed objects in a digital communications network
Gestion d'un élément de réseau par objets gérés dans un réseau de transmission numérique

(30) Priorität: 12.06.1998 DE 19826088
(43) Veröffentlichungstag der Anmeldung: 15.12.1999
(73) Patentinhaber: Alcatel Lucent, 75008 Paris (FR)
(72) Erfinder: Schabernack, Jörg, 71665 Vaihingen/Enz (DE); Banzhaf, Monika, 70439 Stuttgart (DE)
(74) Vertreter: Brose, Gerhard

(56) Entgegenhaltungen:
- WO-A-96/16502
- DE-A- 3 733 650
- GB-A- 2 308 780

## Beschreibung

Im Bereich der digitalen Nachrichtenübertragungsnetze, insbesondere im Bereich der SDH-Netze (SDH: Synchrone Digitale Hierarchie), ist für jedes Netzelement eine Datenbank vorhanden, in der Daten über die aktuelle Netzkonfiguration gespeichert sind. Das Netzelement wird von einer Steuerung mittels verwalteter Objekte, sogenannter "managed objects", verwaltet.

In dem Artikel "Management von SDH-Netzelementen: eine Anwendung der Informationsmodellierung" von M.P. Bosse et.al., erschienen in der von der Anmelderin publizierten Zeitschrift "Elektrisches Nachrichtenwesen", Ausgabe Nr. 4, 1993, auf Seiten 329 - 338 sind ein Verfahren und Vorrichtungen zum Verwalten von Netzelementen in digitalen Nachrichtenübertragungsnetzen beschrieben. Dort ist anhand des Bildes 2 beschrieben, daß SDH-Netzelemente mit dem sogenannten OSI-Systemmanagement verwaltet werden (OSI: Open Systems Interconnection). Das Management erfolgt durch Zugriff auf verwaltete Objekte, in die alle relevanten Daten eingebettet sind. Auf Seite 332 dieses Artikels sind die Eigenschaften der verwalteten Objekte beschrieben sowie Elemente, die in der OSI-Kommunikation verwendet werden, insbesondere das sogenannte CMISE (Common Management Information System Element). Das CMISE unterstützt mehrere dort beschriebene Dienste zum Zugriff auf die verwalteten Objekte. Wie es dort im Bild 2 dargestellt ist, enthält das Netzelement eine Steuerung und eine damit verbundene Datenbank MIB (management information base), deren Funktion jedoch nicht näher beschrieben ist.

WO 96/16502 offenbart ein Verfahren zum Verwalten eines verwalteten Systems durch ein verwaltendes System. Das verwaltende System besitzt einen Zwischenspeicher, in dem Management-Informationen zwischengespeichert werden, die von dem verwalteten System abgefragt wurden. Das verwaltete System besitzt eine Datenbank, in der die Management-Informationen dauerhaft gespeichert sind. Wenn die Verwaltungsbeziehung eingerichtet oder das verwaltende System aktiviert wird, wird geprüft, ob die Information im Zwischenspeicher richtig und aktuell ist. Ist dies nicht der Fall, so wird die Information aus der Datenbank des verwalteten Systems abgerufen. Das verwaltende System ist ein Überwachungssystem und das verwaltete System ist ein Netzelement. Das Netzelement ist nach einem objektorientierten Informationsmodell modelliert.

GB 23 08 780 beschreibt ein Netzwerkmanagementsystem, welches ein Kernelement und periphere Elemente aufweist, auf denen verschiedene Anwendungsprogramme laufen. Das Kernelement enthält eine Datenbank, in der Managementinformationen in der Form von verwalteten Objekten gespeichert sind. Die peripheren Elemente besitzen Zwischenspeicher, in denen lokale Kopien von Objekten gespeichert sind. Objekte, die nicht länger lokal benötigt werden, werden aus dem lokalen Zwischenspeicher gelöscht.

Aufgabe der Erfindung ist es ein Verfahren und Vorrichtungen zum Verwalten eines Netzelementes mittels verwalteter Objekte vorzuschlagen. Die Vorrichtungen sollen einfach aufgebaut sein und einen schnellen Zugriff auf die benötigten verwalteten Objekte ermöglichen.

Gelöst wird die Aufgabe durch ein Verfahren mit den Merkmalen nach Anspruch 1, durch ein Netzelement und durch ein digitales Nachrichtenübertragungsnetz mit den Merkmalen nach einem der nebengeordneten Ansprüche.

Demnach wird aufgrund einer Anfrage zum Zugriff auf eines der verwalteten Objekte geprüft, ob dieses gefragte Objekt in dem Zwischenspeicher gespeichert ist. Falls dieses gefragte Objekt nicht in dem Zwischenspeicher gespeichert ist, wird geprüft, ob genügend Speicherplatz vorhanden ist, um dieses Objekt in den Zwischenspeicher zu schreiben. Falls nicht genügend Speicherplatz vorhanden ist, wird zumindest eines der bereits zwischengespeicherten Objekte gemäß mindestens einem vorgebbaren Kriterium aus dem Zwischenspeicher gelöscht und in eine Datenbank ausgelagert. Das gefragte Objekt wird zum Zugriff darauf aus der Datenbank gelesen und in den Zwischenspeicher geschrieben.

Somit werden aus dem Zwischenspeicher einzelne Objekte gemäß vorgebbarer Kriterien gelöscht, um Speicherplatz für neue gefragte Objekte zu schaffen. Die gelöschten alten Objekte werden in die Datenbank ausgelagert und können von dort bei Bedarf wieder in den Zwischenspeicher zurück geschrieben werden. Dadurch wird erreicht, daß auch große Netzelemente, die auf eine große Anzahl von verwalteten Objekten Zugriff haben müssen, lediglich einfache Zwischenspeicher mit kleiner Kapazität benötigen, und daß trotzdem alle verwalteten Objekte zur Verfügung stehen.

Vorteilhafte Ausführungen ergeben sich aus den Unteransprüchen.

Besonders vorteilhaft ist es, wenn anhand des Kriteriums diejenigen Objekte, auf die häufig zugegriffen wird, in dem Zwischenspeicher verbleiben und nicht gelöscht werden. Dadurch wird ein Auslagern und Zurückschreiben von Objekten möglichst selten benötigt. Besonders häufig benötigte Objekte verbleiben damit in dem Zwischenspeicher, auf den sehr schnell zugegriffen werden kann. Besonders selten benötigte Objekte verbleiben damit nur für die Zeitdauer des Zugriffs im Zwischenspeicher.

Außerdem ist es vorteilhaft, wenn nur eine vorgebbare Anzahl von denjenigen Objekten in dem Zwischenspeicher verbleibt, auf die zuletzt zugegriffen wurde. Damit verbleiben die zuletzt sehr oft verwendeten Objekte im Zwischenspeicher, also diejenigen Objekte, für die ein erneuter Zugriff sehr wahrscheinlich ist.

Vorteilhaft ist auch das vorgebbare Kriterium als Filterfunktion auszuführen, insbesondere als Funktion für ein CMIS-Filter. Die Filterfunktion gibt an, welche Objekte in dem Zwischenspeicher gespeichert bleiben sollen. Damit werden solche Objekte bevorzugt zwischengespeichert, die bestimmte Eigenschaften haben, wie etwa besondere Namen, Attribute oder dergleichen.

Die Erfindung wird im folgenden näher anhand eines Ausführungsbeispieles und unter Zuhilfenahme der folgenden Figuren beschrieben:
- Fig. 1,: die schematisch eine Verschaltung von einer Steuerung mit einer Datenbank und einem Zwischenspeicher für ein Netzelement zeigt; und
- Fig. 2,: die das Blockschaltbild für ein erfindungsgemäßes Verfahren zum Verwalten des Netzelementes zeigt.

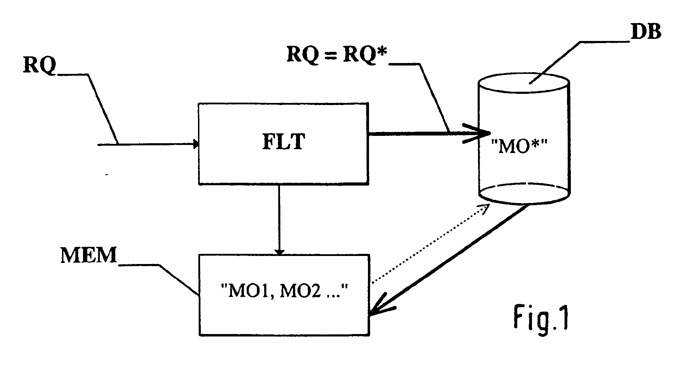

Fig. 1 zeigt schematisch die Verschaltung folgender Komponenten eines Netzelementes für ein digitales Nachrichtenübertragungsnetz: Eine Steuerung FLT, eine damit verbundene Datenbank DB und einen damit verbundenen Zwischenspeicher MEM. Sowohl die Datenbank DB als auch der Zwischenspeicher MEM dienen zum Speicheren von verwalteten Objekten. Die Verschaltung ist Bestandteil eines nicht dargestellten Netzelementes für ein SDH-Netz. Der Zugriff auf die verwalteten Objekte erfolgt über CMISE-Anfragen.

In dem Zwischenspeicher MEM, der ein schnell beschreibbarer und schnell lesbarer Halbleiter ist, sind beispielsweise die Objekte MO1 und MO2 gespeichert. In der Datenbank DB, die auf einer Festplatte eingerichtet ist, befinden sich Objekte, die aus dem Zwischenspeicher gelöscht wurden, beispielsweise das Objekt MO*. Die Steuerung FLT verarbeitet nun Anfragen RQ zum Zugriff auf die Objekte.

Tritt eine Anfrage am Eingang der Steuerung FLT auf, so steuert diese Lese- und Schreibzugriffe auf den Halbleiter oder die Festplatte, wo die entsprechenden Objekte gespeichert sind. Liegt eine Anfrage zum Zugriff auf ein bereits zwischengespeichertes Objekt an, z.B. auf das Objekt MO2, so steuert die Steuerung FLT das Lesen dieses Objektes MO2 aus dem Zwischenspeicher MEM. Liegt jedoch eine Anfrage an zum Zugriff auf ein Objekt an, das sich nicht im Zwischenspeicher MEM befindet, beispielsweise die Anfrage RQ* zum Zugriff auf das Objekt MO*, so steuert die Steuerung FLT das Lesen dieses Objektes MO* aus der Datenbank DB und das Zwischenspeichern.

Die Steuerung FLT führt also eine Filterfunktion aus, die die eingehenden Anfragen RQ danach selektiert, ob der Zugriff auf Objekte aus dem Zwischenspeicher oder auf Objekte, die nicht mehr oder noch nicht im Zwischenspeicher gespeichert sind, gewünscht ist. Zusätzlich kann auch noch eine Filterfunktion, insbesondere die Funktion eines CMISE-Filters, implementiert werden, bei der die Objekte anhand von ihren Eigenschaften selektiert werden. Beispielsweise wird anhand von Attributen entschieden, welche Objekte im Zwischenspeicher verbleiben sollen.

Außerdem steuert die Steuerung FLT das Löschen von Objekten aus dem Zwischenspeicher MEM, um dort neuen Speicherplatz zu schaffen, sowie das Schreiben dieser gelöschten Objekte in die Datenbank DB. Somit werden zumindest die gelöschten Objekte in der Datenbank abgelegt und verbleiben dort für spätere Zugriffswünsche (Anfragen). Es ist auch denkbar eine größere Datenbank einzusetzen, in der alle verwalteten Objekte permanent gespeichert werden. Der Datenbank DB kommt damit eine Backup-Funktion für den Zwischenspeicher MEM zu. Sollte durch Störungen der Zwischenspeicher MEM vollständig gelöscht werden, so sind dennoch alle Objekte durch Zugriff auf die Datenbank DB verfügbar. In diesem Fall erübrigt sich das Schreiben eines gelöschten Objektes in die Datenbank. Die Steuerung muß lediglich das Objekt aus dem Zwischenspeicher löschen, um Speicherplatz zu schaffen.

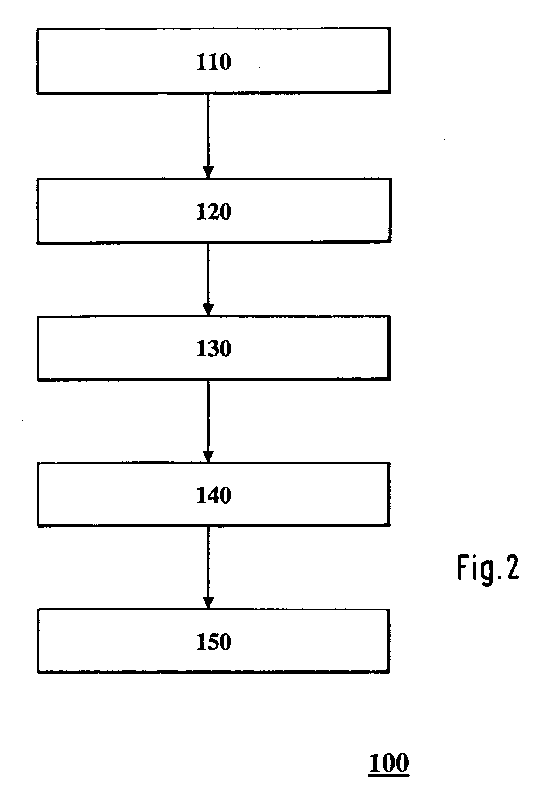

Die Arbeitsweise der Steuerung FLT wird anhand der Fig. 2 näher beschrieben, die schematisch das Ablaufdiagramm eines Verfahrens 100 dargestellt, das die Steuerung zum Verwalten des Netzelementes durchführt. Das Verfahren 100 umfaßt die im folgenden beschriebenen Schritte 110 bis 150:

In einem ersten Schritt 110 wird aufgrund einer Anfrage zum Zugriff auf das verwaltete Objekt MO* geprüft, ob dieses gefragte Objekt in dem Zwischenspeicher gespeichert ist. Falls dies nicht zutrifft, wird in einem zweiten Schritt 120 geprüft, ob genügend Speicherplatz in dem Zwischenspeicher vorhanden ist.

Ist dies nicht der Fall ist, werden in einem Schritt 130 bereits zwischengespeicherte Objekte gemäß vorgebbarer Kriterien aus dem Zwischenspeicher gelöscht, um Speicherplatz für das gefragte Objekte zu schaffen. In diesem Beispiel wird als Kriterium die Häufigkeit herangezogen, die angibt wie oft auf die Objekte zugegriffen worden ist. Die am häufigsten verwendeten Objekte verbleiben im Zwischenspeicher und werden nicht in die Datenbank ausgelagert. In diesem Beispiel wird geprüft, wie häufig auf ein jedes Objekt innerhalb eines Zeitintervalles von einer halben Stunde zugegriffen wurde. Die Häufigkeit wird mit einem als Minimum vorgegebenen Kriterium verglichen. Ist zu wenig Speicherplatz vorhanden, so werden diejenigen Objekte aus dem Zwischenspeicher gelöscht, auf die nur mit einer geringen Häufigkeit zugegriffen wurde, die das vorgegebene Minimum unterschreitet. Damit werden die am wenigsten benötigten Objekte aus dem Zwischenspeicher gelöscht und in die Datenbank ausgelagert. Für diese "least recently used objects" ist die Wahrscheinlichkeit gering, erneut verwendet zu werden.

Es ist auch denkbar, daß nur eine vorgebbare Anzahl von denjenigen Objekten in dem Zwischenspeicher verbleibt, auf die zuletzt sehr oft zugegriffen wurde. Beispielsweise verbleiben die letzten zehn "most recently used objects" im Zwischenspeicher.

Um Platz für das gefragte Objekt MO* zu schaffen, wird in dem Schritt 130 beispielswiese das in Fig. 1 dargestellte Objekt MO1 aus dem Zwischenspeicher entfernt und in die Datenbank DB geschrieben, wo es für spätere Anfragen wieder abgerufen werden kann. Damit werden weniger häufig benötigte Objekte in die Datenbank ausgelagert.

Das gefragte Objekt MO* hingegen wird in einem nächsten Schritt 140 aus der Datenbank gelesen und in den Zwischenspeicher geschrieben. Damit werden die gewünschten Objekte, hier MO*, aus der Datenbank wieder zurücktransferiert in den Zwischenspeicher, der einen schnellen Zugriff ermöglicht.

In einem letzten Schritt 150 wird das Netzelement nun in Abfolge der auftretenden Anfragen (CMISE-Requests) durch Zugriff auf den Zwischenspeicher und mittels der dort zwischengespeicherten Objekte verwaltet.

Das oben beschriebene Verfahren läßt sich wie folgt zusammenfassend darstellen:

Ist das gefragte Objekt MO* noch nicht oder nicht mehr im Zwischenspeicher gespeichert (Schritt 110), so wird es aus der Datenbank abgerufen und, falls genügend Speicherplatz vorhanden (Schritt 120) ist, so wird es in den Zwischenspeicher (zurück) geschrieben (Schritt 140). Andernfalls kann es sofort verwendet werden. Ist jedoch nicht genügend Speicherplatz vorhanden (Schritt 120), so muß zunächst Platz geschaffen werden durch Auslagern von "alten" Objekten (Schritt 130). Jede Anfrage wird durch Zugriff auf den Zwischenspeicher abgearbeitet (Schritt 150).

Es ist auch denkbar unabhängig von der aktuellen Auslastung des Zwischenspeichers Speicherplatz im Zwischenspeicher für "neue" Objekte frei zu machen, etwa in vorgegebenen Zeitabständen. Dadurch wird der Zwischenspeicher von Zeit zu Zeit "aufgeräumt" und es wird vorsorglich für genügend freien Speicherplatz gesorgt.

Die Erfindung ist besonders geeignet zum Einsatz in SDH-Netzelementen, insbesondere in Cross-Connects.

## Patentansprüche

1. Verfahren (100) zum Verwalten eines Netzelementes, welches eine Steuerung (FLT) zum Verwalten des Netzelementes mittels verwalteter Objekte (MO1, MO2, MO*), einen damit verbundenen Zwischenspeicher (MEM) und eine damit verbundene Datenbank (DB) aufweist; wobei das Netzelement in Abfolge von auftretenden Anfragen (RQ) durch Zugriff auf den Zwischenspeicher (MEM) und mittels der dort zwischengespeicherten Objekte (MO1, MO2, MO*) verwaltet wird, mit folgenden Schritten:
- aufgrund einer Anfrage (RQ=RQ*) zum Zugriff auf eines (MO*) der verwalteten Objekte (MO1, MO2, MO*) wird geprüft, ob dieses gefragte Objekt (MO*) in dem Zwischenspeicher (MEM) gespeichert ist (Schritt 110);
- falls dieses gefragte Objekt (MO*) nicht in dem Zwischenspeicher (MEM) gespeichert ist, wird geprüft, ob genügend Speicherplatz vorhanden ist, um dieses Objekt (MO*) in den Zwischenspeicher (MEM) zu schreiben (Schritt 120);
- falls nicht genügend Speicherplatz vorhanden ist, wird zumindest eines (MO1) der bereits zwischengespeicherten Objekte (MO1, MO2) gemäß mindestens einem vorgebbaren Kriterium aus dem Zwischenspeicher (MEM) gelöscht und in eine Datenbank (DB) ausgelagert (Schritt 130);
- das gefragte Objekt (MO*) wird zum Zugriff darauf aus der Datenbank (DB) gelesen und in den Zwischenspeicher (MEM) geschrieben (Schritt 140).

2. Verfahren (100) nach Anspruch 1, bei dem
anhand des Kriteriums diejenigen Objekte (MO2), auf die am häufigsten zugegriffen wird, in dem Zwischenspeicher (MEM) verbleiben und nicht gelöscht werden.

3. Verfahren nach Anspruch 2, bei dem
nur eine vorgebbare Anzahl von denjenigen Objekten in dem Zwischenspeicher verbleibt, auf die zuletzt zugegriffen wurde.

4. Verfahren nach Anspruch 1,
bei dem das vorgebbare Kriterium eine Filterfunktion ist, insbesondere eine Funktion für ein CMIS-Filter, die angibt, welche Objekte in den Zwischenspeicher gespeichert bleiben sollen.

5. Verfahren nach Anspruch 1,
bei dem das vorgebbare Kriterium eine Zeitdauer ist, die angibt, wie lang ein jedes Objekt in dem Zwischenspeicher gespeichert bleiben darf.

6. Verfahren nach Anspruch 1,
bei dem das vorgebbare Kriterium ein maximale Anzahl ist, die angibt, wie viele Objekte in dem Zwischenspeicher gespeichert bleiben dürfen.

7. Netzelement für ein digitales Nachrichtenübertragungsnetz mit einer Steuerung (FLT) zum Verwalten des Netzelementes mittels verwalteten Objekten (MO1, MO2, MO*), mit einem damit verbundenen Zwischenspeicher (MEM) und einer damit verbundenen Datenbank (DB), bei dem die Steuerung (FLT) angepasst ist, das Netzelement in Abfolge von auftretenden Anfragen (RQ) durch Zugriff auf den Zwischenspeicher (MEM) und mittels der dort zwischengespeicherten Objekte (MO1, M02, MO*) zu verwalten, bei dem die Steuerung (FLT) angepasst ist aufgrund einer Anfrage (RQ=RQ*) zum Zugriff auf eines (MO*) der verwalteten Objekte (MO1, MO2, MO*) zu prüfen, ob dieses gefragte Objekt (MO*) in dem Zwischenspeicher (MEM) gespeichert ist, bei dem die Steuerung (FLT)weiter angepasst ist, falls dieses gefragte Objekt (MO*) nicht in dem Zwischenspeicher (MEM) gespeichert ist, zu prüfen, ob genügend Speicherplatz vorhanden ist, um dieses Objekt (MO*) in den Zwischenspeicher (MEM) zu schreiben, bei dem die Steuerung (FLT) angepasst ist, falls nicht genügend Speicherplatz vorhanden ist, zumindest eines (MO1) der bereits zwischengespeicherten Objekte (MO1, MO2) gemäß mindestens einem vorgebbaren Kriterium aus dem Zwischenspeicher (MEM) zu löschen und in eine Datenbank (DB) auszulagern, und bei dem die Steuerung (FLT) angepasst ist, das gefragte Objekt (MO*) zum Zugriff darauf aus der Datenbank (DB) zu lesen und in den Zwischenspeicher (MEM) zu schreiben.

8. Netzelement nach Anspruch 7, bei dem
der Zwischenspeicher ein Halbleiterspeicher (MEM) ist und bei dem die Datenbank (DB) auf einem nicht-flüchtigen Massenspeicher eingerichtet ist.

9. Digitales Nachrichtenübertragungsnetz mit Netzelementen, von denen jedes eine Steuerung (FLT) zum Verwalten des Netzelementes mittels verwalteter Objekte (MO1, MO2, MO*), einen damit verbundenen Zwischenspeicher (MEM) und eine damit verbundene Datenbank (DB) enthält, bei dem die Steuerung (FLT) angepasst ist in Abfolge von auftretenden Anfragen (RQ) durch Zugriff auf den Zwischenspeicher (MEM) und mittels der dort zwischengespeicherten Objekte (MO1, MO2, MO*) das Netzelement zu verhalten, bei dem die Steuerung (FLT)angepasst ist, aufgrund einer Anfrage (RQ=RQ*) zum Zugriff auf eines (MO*) der verwalteten Objekte (MO1, MO2, MO*) zu prüfen, ob dieses gefragte Objekt (MO*) in dem Zwischenspeicher (MEM) gespeichert ist, bei dem die Steuerung (FLT) weiter anpegasst ist, falls dieses gefragte Objekt (MO*) nicht in dem Zwischenspeicher (MEM) gespeichert ist, zu prüfen, ob genügend Speicherplatz vorhanden ist, um dieses Objekt (MO*) in den Zwischenspeicher (MEM) zu schreiben, bei dem die Steuerung (FLT) angepasst ist, falls nicht genügend Speicherplatz vorhanden ist, zumindest eines (MO1) der bereits zwischengespeicherten Objekte (MO1, MO2) gemäß mindestens einem vorgebbaren Kriterium aus dem Zwischenspeicher (MEM) zu löschen und in eine Datenbank (DB) auszulagern, und bei dem die Steuerung (FLT) angepasst ist, das gefragte Objekt (MO*) zum Zugriff darauf aus der Datenbank (DB) zu lesenund in den Zwischenspeicher (MEM) zu schreiben.

10. Nachrichtenübertragungsnetz nach Anspruch 9, insbesondere SDH-Netz, bei dem die Netzelemente Cross-Connects, Add-Drop-Multiplexer und/oder Leitungsmultiplexer sind.

## Claims

1. Method (100) for managing a network element, which has a controller (FLT) for managing the network element by means of managed objects (MO1, MO2, MO*), a thereto connected buffer (MEM) and a thereto connected database (DB); the network element being managed in the sequence of occurring requests (RQ) through access to the buffer (MEM) and by means of the objects temporarily stored there (MO1, MO2, MO*), with the following steps:
• based on a request (RQ=RQ*) for access to one (MO*) of the managed objects (MO1, MO2, MO*), it is checked whether this requested object (MO*) is stored in the buffer (MEM)-(step 110);
• if this requested object (MO*) is not in the buffer (MEM), it is checked whether there is sufficient memory space to write this object (MO*) to the buffer (MEM) - (step 120);
• if there is not sufficient memory space, at least one (MO1) of the objects already temporarily stored (MO1, MO2) is deleted from the buffer (MEM) in accordance with at least one predefinable criterion, and relocated to a database (DB) - (step 130);
• the requested object (MO*) is then read out from the database (DB) for access, and written to the buffer (MEM) - (step 140).

2. Method (100) according to Claim 1, in which on the basis of the criterion, those objects (M02) which are most frequently accessed remain in the buffer (MEM) and are not deleted.

3. Method according to Claim 2, in which only a predefinable number of the objects which were last accessed remains in the buffer.

4. Method according to Claim 1, in which the predefinable criterion is a filter function, in particular a function for a CMIS filter, which specifies which objects should remain stored in the buffer.

5. Method according to Claim 1, in which the predefinable criterion is a period of time, which specifies how long each object can remain stored in the buffer.

6. Method according to Claim 1, in which the predefinable criterion is a maximum number, which specifies how many objects can remain stored in the buffer.

7. Network element for a digital communications network with a controller (FLT) for managing the network element by means of managed objects (MO1, MO2, MO*), with a thereto connected buffer (MEM) and a thereto connected database (DB), in which the controller (FLT) is adapted to manage the network element in the sequence of occurring requests (RQ) through access to the buffer (MEM) and by means of the objects temporarily stored there (MO1, MO2, MO*), in which the controller (FLT) is adapted to check, based on a request (RQ=RQ*) for access to one (MO*) of the managed objects (MO1, MO2, MO*), whether this requested object (MO*) is stored in the buffer (MEM), in which the controller (FLT) is further adapted to check, in the event that this requested object (MO*) is not in the buffer (MEM), whether there is sufficient memory space to write this object (MO*) to the buffer (MEM), in which the controller (FLT) is adapted, in the event that there is not sufficient memory space, to delete from the buffer (MEM) and relocate to a database (DB) in accordance with at least one predefinable criterion at least one (MO1) of the objects (MO1, MO2) already temporarily stored, and in which the controller (FLT) is adapted to read the requested object (MO*) from the database (DB) for access to it, and to write it to the buffer (MEM).

8. Network element according to Claim 7, in which the buffer is a semiconductor memory (MEM) and in which the database (DB) is set up on a non-volatile mass storage unit.

9. Digital communications network with network elements, each of these containing a controller (FLT) for managing the network element by means of managed objects (MO1, MO2, MO*), a thereto connected buffer (MEM) and a thereto connected database (DB), in which the controller (FLT) is adapted to manage the network element in the sequence of occurring requests (RQ) through access to the buffer (MEM) and by means of the objects temporarily stored there (MO1, MO2, MO*), in which the controller (FLT) is adapted to check, based on a request (RQ=RQ*) for access to one (MO*) of the managed objects (MO1, MO2, MO*), whether this requested object (MO*) is stored in the buffer (MEM), in which the controller (FLT) is further adapted to check, in the event that this requested object (MO*) is not in the buffer (MEM), whether there is sufficient memory space to write this object (MO*) to the buffer (MEM), in which the controller (FLT) is adapted, in the event that there is not sufficient memory space, to delete from the buffer (MEM) and relocate to a database (DB) in accordance with at least one predefinable criterion at least one (MO1) of the objects (MO1, MO2) already temporarily stored, and in which the controller (FLT) is adapted to read the requested object (MO*) from the database (DB) for access to it, and to write it to the buffer (MEM).

10. Communications network according to Claim 9, in particular SDH network, in which the network elements are cross-connects, add-drop multiplexers and/or line multiplexers.

## Revendications

1. Procédé (100) permettant de gérer un élément de réseau, qui présente une commande (FLT) permettant de gérer l'élément de réseau au moyen d'objets (MO1, MO2, MO*) gérés, une mémoire temporaire (MEM) reliée auxdits objets gérés, et une base de données (DB), reliée auxdits objets gérés; l'élément de réseau étant géré dans l'ordre d'apparition des requêtes (RQ) par l'accès à la mémoire temporaire (MEM) et au moyen des objets (MO1, MO2, MO*) stockés temporairement dans ladite mémoire temporaire, avec les étapes suivantes :
- sur la base d'une requête (RQ=RQ*) d'accès à l'un (MO') des objets (MO1, MO2, MO*) gérés, on vérifie si cet objet (MO*) demandé est stocké dans la mémoire temporaire (MEM) (étape 110) ;
- si cet objet (MO*) demandé n'est pas stocké dans la mémoire temporaire (MEM), on vérifie si l'espace mémoire existant est suffisant, pour écrire cet objet (MO*) dans la mémoire temporaire (MEM) (étape 120) ;
- si l'espace mémoire existant n'est pas suffisant, au moins l'un (MO1) des objets (MO1, MO2) déjà stockés temporairement est supprimé de la mémoire temporaire (MEM) conformément à un critère pouvant être prescrit et transféré dans une base de données (DB) (étape 130) ;
- l'objet (MO*) auquel il est demandé d'accéder est lu dans la base de données (DB) et écrit dans la mémoire temporaire (MEM) (étape 140).

2. Procédé (100) selon la revendication 1, avec lequel
les objets (MO2), auxquels on a accès le plus fréquemment, restent dans la mémoire temporaire (MEM) au moyen du critère et ne sont pas supprimés

3. Procédé selon la revendication 2, avec lequel
seul un nombre d'objets pouvant être prescrit, auxquels on eu accès en dernier, reste dans la mémoire temporaire.

4. Procédé selon la revendication 1,
avec lequel le critère pouvant être prescrit est une fonction de filtre, en particulier, une fonction pour un filtre CMIS qui indique, quels objets doivent rester stockés dans la mémoire temporaire.

5. Procédé selon la revendication 1,
avec lequel le critère pouvant être prescrit est une durée qui indique combien de temps chaque objet peut rester stocké dans la mémoire temporaire.

6. Procédé selon la revendication 1,
avec lequel le critère pouvant être prescrit est un nombre maximum qui indique combien d'objets peuvent rester stockés dans la mémoire temporaire.

7. Élément de réseau pour un réseau de communication numérique comportant une commande (FLT) permettant de gérer l'élément de réseau au moyen d'objets (MO1, MO2, MO*) gérés, une mémoire temporaire (MEM), reliée auxdits objets gérés, et une base de données (DB) reliée auxdits objets gérés, avec lequel la commande (FLT) est adaptée pour gérer l'élément de réseau dans l'ordre d'apparition des requêtes (RQ) par l'accès à la mémoire temporaire (MEM) et au moyen des objets (MO1, M02, MO*) stockés temporairement dans ladite mémoire temporaire, la commande (FLT) est adaptée pour vérifier, sur la base d'une requête (RQ-RQ*) d'accès à l'un (MO*) des objets (MO1, MO2, MO*) gérés, si cet objet demandé (MO') est stocké dans la mémoire temporaire (MEM), la commande (FLT) est en outre adaptée, si cet objet (MO*) demandé est stocké dans la mémoire temporaire (MEM), pour vérifier si l'espace mémoire existant est suffisant, pour écrire cet objet (MO*) dans la mémoire temporaire (MEM), la commande (FLT) est adaptée, si l'espace mémoire existant n'est pas suffisant, pour supprimer dans la mémoire temporaire (MEM) et transférer dans une base de données (DB) au moins l'un (MO1) des objets (MO1, MO2) déjà stockés temporairement conformément à au moins un critère pouvant être prescrit, et la commande (FLT) est adaptée pour lire dans la base de données (DB) et écrire dans la mémoire temporaire (MEM) l'objet (MO*) auquel il est demandé d'accéder.

8. Élément de réseau selon la revendication 7, avec lequel
la mémoire temporaire est une mémoire à semi-conducteur (MEM) et la base de données (DB) est organisée sur une mémoire de masse non volatile.

9. Réseau de communication numérique comportant des éléments de réseau, dont chacun contient une commande (FLT) permettant de gérer l'élément de réseau au moyen d'objets (MO1, M02, MO*) gérés, une mémoire temporaire (MEM), reliée auxdits objets gérés, et une base de données (DB) reliée auxdits objets gérés, avec lequel la commande (FLT) est adaptée pour gérer l'élément de réseau dans l'ordre d'apparition des requêtes (RQ) par l'accès à la mémoire temporaire et au moyen des objets (MO1, MO2, MO*) stockés temporairement dans ladite mémoire temporaire, la commande (FLT) est adaptée pour vérifier, sur la base d'une requête (RQ=RQ*) d'accès à l'un (MO*) des objets (MO1, MO2, MO*) gérés, si cet objet (MO*) demandé est stocké dans la mémoire temporaire (MEM), la commande (FLT) est en outre adaptée, si l'objet (MO*) demandé n'est pas stocké dans la mémoire temporaire (MEM), pour vérifier si l'espace mémoire existant est suffisant pour écrire cet objet (MO*) dans la mémoire temporaire (MEM), la commande (FLT) est adaptée, si l'espace mémoire existant n'est pas suffisant, pour supprimer de la mémoire temporaire (MEM) et transférer dans une base de données (DB) au moins l'un (MO1) des objets (MO1, MO2) déjà stockés dans la mémoire temporaire conformément à au moins un critère pouvant être prescrit, et la commande (FLT) est adaptée pour lire dans la base de données (DB) et écrire dans la mémoire temporaire (MEM) l'objet (MO*) auquel il est demandé d'accéder.

10. Réseau de communication numérique selon la revendication 9, en particulier, réseau SDH, avec lequel les éléments de réseau sont des répartiteurs, un multiplexeur d'insertion-extraction et/ou un multiplexeur de ligne.
